# EUROPÄISCHE PATENTSCHRIFT

(11) **EP 4 189 250 B1**
(45) Veröffentlichungstag und Bekanntmachung des Hinweises auf die Patenterteilung: **27.05.2026**
(21) Anmeldenummer: 21749805.4
(22) Anmeldetag: 26.07.2021
(51) Int. Cl.: F04D 29/02, F04D 29/42

(54) **GEHÄUSE FÜR STRÖMUNGSFÜHRENDE BAUTEILE**
HOUSING FOR FLOW-CONDUCTING COMPONENTS
BOÎTIER POUR ÉLÉMENTS DE GUIDAGE DE FLUX

(30) Priorität: 28.07.2020 DE 102020119914
(43) Veröffentlichungstag der Anmeldung: 07.06.2023
(73) Patentinhaber: KSB SE & Co. KGaA, 67227 Frankenthal (DE)
(72) Erfinder: NOBEL, Tammuz, 67227 Frankenthal (DE)
(86) Internationale Anmeldenummer: PCT/EP2021/070857
(87) Internationale Veröffentlichungsnummer: WO 2022/023266

(56) Entgegenhaltungen:
- EP-A1- 2 236 839
- DE-A1- 102014 004 121
- DE-A1- 102017 204 588
- US-A- 5 207 560
- US-A1- 2013 121 817
- US-A1- 2018 320 703

## Beschreibung

Die Erfindung betrifft ein Gehäuse für ein strömungsführendes Bauteil, welches mindestens zwei Funktionsbereiche aufweist.

Gehäuse dienen dem flüssigkeitsdichten und druckfesten Abschluss eines Innenraumes nach außen. Beispielsweise bei Kreiselpumpen umschließen sie den Pumpenläufer, der dem Fördermedium durch Laufräder auf der rotierenden Welle Energie zuführt. Der Zu- und Abführung des Förderstroms dienen die Eintritts- und Austrittsstutzen, die oft auch als Zulauf- oder Saug- sowie Druckstutzen bezeichnet werden. Sie werden mit Rohrverbindungen an Rohrleitungen angeschlossen.

Die Pumpengehäuse werden überwiegend gegossen, können aber auch geschmiedet, geschweißt, gepresst oder gezogen werden. Die Maschinensicherheit hängt wesentlich von der Haltbarkeit des Pumpengehäuses ab, sodass viele branchenspezifische Regelwerke die Gehäusewerkstoffe und z. T. auch die Bemessung der Wandstärken vorschreiben. Häufig dabei verwendete metallische Gusswerkstoffe sind Gusseisen, Sphäro- und Stahlguss, ferritische oder austenitische Chromstähle, austenitisches Gusseisen, aber auch Duplexstähle für hochkorrosionsfeste Anwendungen wie z. B. in der Meerwasserentsalzung.

Dabei werden an die Funktionsbereiche der Gehäuse strömungsführender Bauteile ganz unterschiedliche Anforderungen gestellt. So soll ein Funktionsbereich mit den tragenden Eigenschaften eine hohe Festigkeit und eine geringe Sprödigkeit aufweisen.

Dagegen wird ein Funktionsbereich mit Kontakt zum Strömungsmedium eher abrasiv beansprucht und sollte aus einem harten, verschleißbeständigen Werkstoff ausgeführt sein.

Um diesen Anforderungen zu genügen müssen die Funktionsbereiche der Gehäuse oft umfassend und intensiv in vielen zusätzlichen Arbeitsschritten überarbeitet werden, so dass Beschichtungen, Verstärkungen und ähnliches die erforderlichen Eigenschaften erst erzielen.

Die EP 2 236 839 A1 zeigt ein Kreiselpumpenaggregat, welches eine thermische Isolierung aufweist und eine optimierte Gestaltung der Strömungswege im Inneren zulässt. Dokument US 2018/320703 A zeigt ein Verfahren zur Herstellung einer Pumpe unter Verwendung eines additiven Fertigungsverfahrens.

Aufgabe der Erfindung ist es ein Gehäuse, auch ein großes Gehäuse, für strömungsführende Bauteile mit unterschiedlichen Funktionsbereichen in einem Fertigungsverfahren zu erzeugen. Dabei sollte das Gehäuse individuell hinsichtlich der Materialkombinationen, der Eigenschaften und der Materialdicke gestaltet werden können. Dieses Gehäuse sollte aus möglichst wenigen Einzelteilen bestehen und dabei möglichst leicht sein. Der Austausch von Ersatzteilen sollte durch die Konstruktion des Gehäuses begünstigt sein. Das Gehäuse sollte einfach und kostengünstig realisiert werden können.

Diese Aufgabe wird erfindungsgemäß durch ein Gehäuse für ein strömungsführendes Bauteil gelöst. Bevorzugte Varianten sind den Unteransprüchen, der Beschreibung und den Zeichnungen zu entnehmen.

Gemäß der Erfindung weist ein Gehäuse für strömungsführende Bauteile mehrere Funktionsbereiche auf. Solche Funktionsbereiche erfüllen unterschiedliche Funktionen. So ist ein Funktionsbereich mit Kontakt zum strömenden Medium besonders verschleißfest ausgeführt, um den abrasiven Kräften des strömenden Mediums trotzen zu können. Ein Funktionsbereich mit tragenden Eigenschaften ist in einer optimierten Tragstruktur mit einem hochfesten Werkstoff ausgeführt. Ein Funktionsbereich mit abschließenden Eigenschaften schützt das Gehäuse mit den inneren Funktionsbereichen sowie die innenliegenden Bauteile vor äußeren Einflüssen und erzeugt einen charakteristischen Wiedererkennungseffekt. Dabei ist vorteilhafterweise der Funktionsbereich mit tragenden Eigenschaften zwischen dem innenliegenden Funktionsbereich mit Kontakt zum strömenden Medium und dem außenliegenden Funktionsbereich mit abschließenden Eigenschaften angeordnet. Erfindungsgemäß ist jeder Funktionsbereich aus einem unterschiedlichen Aufbaumaterial generiert, um die idealen Eigenschaften der Funktionsbereiche zu realisieren. Vorteilhafterweise wird das Gehäuse mit allen erforderlichen Funktionsbereichen in einem einzigen generativen Fertigungsverfahren gebildet.

Ein Gehäuse ist eine feste Hülle, die einen empfindlichen Inhalt schützend umgibt und/oder die Umgebung vor einem gefährlichen Inhalt schützt. In der Technik gibt es Gehäuse für Bauteile, Baugruppen und Geräte. Gehäuse für strömungsführende Bauteile können beispielgebend Gehäuse für Pumpen, insbesondere Kreiselpumpen, sowie Gehäuse für Ventile sein.

Das erfindungsgemäße Gehäuse mit den mindestens zwei Funktionsbereichen wird aus unterschiedlichem Aufbaumaterial gebildet. Das Aufbaumaterial umfasst vorzugsweise metallische Pulverteilchen, insbesondere niedriglegierte und/oder hochlegierte Stahlpulverteilchen, und/oder schmelzfähigen Kunststoff und/oder einen Metall-Polymer-Hybridwerkstoff.

Vorzugsweise handelt es sich bei dem Aufbaumaterial zur Herstellung des Gehäuses, insbesondere des Funktionsbereiches mit Kontakt zum strömenden Medium, um metallische Pulverteilchen. Bei einer Variante der Erfindung werden dazu eisenhaltige und/oder cobalthaltige Pulverpartikel eingesetzt. Diese können Zusätze wie beispielsweise Chrom, Molybdän oder Nickel enthalten.

Erfindungsgemäß wird das Gehäuse für strömungsführende Bauteile mit mehreren Funktionsbereichen aus unterschiedlichen Aufbaumaterialien in einem additiven Fertigungsverfahren gebildet. Die 3D-Form des Gehäuses ist in einer Software als Datensatz hinterlegt. An den Stellen, an denen das Gehäuse ausgebildet werden soll, wirkt ein Roboterarm, der über Werkzeuge unterschiedlicher additiver Verfahren verfügt und bildet Schicht für Schicht die unterschiedlichen Funktionsbereiche aus. Vorteilhafterweise kann für jede Schicht nacheinander oder gleichzeitig der geeignete Aufbauprozess für jedes Aufbaumaterial ausgeführt werden, so dass ein komplexes Gehäuse aus unterschiedlichen Werkstoffen entsteht, dessen Funktionsbereiche optimal an die Anforderungen des späteren Einsatzes angepasst ist.

In einer Variante der Erfindung wird der Funktionsbereich mit tragenden Eigenschaften mit dem Schmelzschicht-Werkzeug des additiven Fertigungsverfahren erzeugt, bei dem aus schmelzfähigem Kunststoff ein Raster von Punkten auf eine Fläche aufgetragen wird. Durch Extrudieren mittels einer Düse sowie einer anschließenden Erhärtung durch Abkühlung an der gewünschten Position wird ein tragfähiger Aufbau, insbesondere in Form eines Gitters und/oder in Form von Waben erzeugt. Indem die Funktionsbereiche hohlraumbildend mit besonders tragfähiger Struktur erzeugt werden, weisen die Funktionsbereiche eine enorme Festigkeit bei gleichzeitig sehr geringem Gewicht auf. Der Aufbau des Gehäuses erfolgt üblicherweise, indem wiederholt jeweils zeilenweise eine Arbeitsebene abgefahren und dann die Arbeitsebene stapelnd nach oben verschoben wird, sodass die Funktionsbereiche des Gehäuses schichtweise entstehen.

In einer weiteren Variante der Erfindung wird der Funktionsbereich mit Kontakt zum strömenden Medium und/oder der Funktionsbereich mit abschließenden Eigenschaften mit dem Kaltgasspritz-Werkzeug des additiven Fertigungsverfahrens gebildet. Dabei wird der Beschichtungswerkstoff in Pulverform mit sehr hoher Geschwindigkeit auf den Funktionsbereich mit tragenden Eigenschaften aufgebracht. Dazu wird ein auf wenige hundert Grad aufgeheiztes Prozessgas, beispielsweise Stickstoff oder Helium, durch Expansion in einer Lavaldüse auf Überschallgeschwindigkeit beschleunigt und anschließend die Pulverpartikel in den Gasstrahl injiziert. Die injizierten Partikel werden dabei auf eine so hohe Geschwindigkeit beschleunigt, dass sie beim Aufprall auf Teile des Gehäuses eine dichte und fest haftende Schicht bilden.

Hierfür werden metallische Pulverteilchen, insbesondere niedriglegierte und/oder hochlegierte Stahlpulverteilchen und/oder cobalthaltige Pulverpartikel mit Zusätzen wie beispielsweise Chrom, Molybdän oder Nickel verwendet. Je nach Anforderung an die Funktionsbereiche können die Art der Pulverteilchen und/oder die aufgetragene Schichtdicke variiert werden. Vorteilhafterweise lässt sich in einem additiven Fertigungsverfahren ein Gehäuse fertigen, das hinsichtlich individueller Anforderungen gestaltet wurde. Dazu wird jeweils ein angepasster Datensatz der 3D-Form in der Software des additiven Fertigungsverfahrens hinterlegt.

In einer besonders vorteilhaften Variante der Erfindung wird der Funktionsbereich mit Kontakt zum strömenden Medium und/oder der Funktionsbereich mit abschließenden Eigenschaften aus einem Aufbaumaterial durch aufeinanderfolgendes Schmelzen und Erstarren von Schichten mittels Strahlung hergestellt. Die unterschiedlichen Eigenschaften der einzelnen Funktionsbereiche des Gehäuses werden dabei durch Variationen der Strahlung generiert. Durch gezielte Steuerung der lokalen Wärmeeinbringung wird bereits beim Bau des Gehäuses, insbesondere der Funktionsbereiche eine Modifizierung der Werkstoffeigenschaften vorgenommen. Dadurch gelingt es, in einem Funktionsbereich des Gehäuses Zonen und Gefüge unterschiedlicher Werkstoffzustände eines chemisch-homogenen Werkstoffs und damit unterschiedlicher Eigenschaften zu erzeugen.

Zur Erzeugung des Gehäuses mit mindestens zwei Funktionsbereichen erfolgt eine gezielte Steuerung des Energieeintrags beim Aufbau zur Änderung der mechanischen Eigenschaften im Mikrovolumen des Werkstoffs. Auf eine nachträgliche Wärmebehandlung wird verzichtet, sodass die lokal auftretenden unterschiedlichen Werkstoffzustände erhalten bleiben. Aufwendige Beschichtungen sind ebenfalls nicht mehr erforderlich.

Der metallische Aufbauwerkstoff wird in Pulverform in einer dünnen Schicht auf eine Platte aufgebracht. Der pulverförmige Werkstoff wird mittels Strahlung an den jeweils gewünschten Stellen lokal vollständig umgeschmolzen und bildet nach der Erstarrung eine feste Materialschicht. Anschließend wird diese Grundplatte um den Betrag einer Schichtdicke abgesenkt und es wird erneut Pulver aufgetragen. Dieser Zyklus wird solange wiederholt, bis alle Schichten umgeschmolzen sind. Das fertige Gehäuse wird vom überschüssigen Pulver gereinigt.

Als Strahlung kann beispielsweise ein Laserstrahl zum Einsatz kommen, welcher das strömungsführende Bauteil aus den einzelnen Pulverschichten generiert. Die Daten zur Führung des Laserstrahls werden auf Grundlage eines 3D-CAD-Körpers mittels einer Software erzeugt. Alternativ zu einem selektiven Laserschmelzen kann auch ein Elektronenstrahl (EBM) zum Einsatz kommen.

In einer weiteren Variante der Erfindung wird der durch die Strahlung eingebrachte Energieeintrag in den Funktionsbereichen, die mit dem Medium in Kontakt kommen, beispielsweise den Flächen von den Funktionsbereichen, die vorwiegend tragende Eigenschaften haben, unterschieden. Dies kann beispielsweise durch Variation der Intensität der Strahlung erreicht werden. Auch die Scangeschwindigkeit, mit welcher der Laserstrahl über die einzelnen Pulverschichten verfährt, beeinflusst den Energieeintrag und somit das entstehende Gefüge. Der Funktionsbereich, welcher tragende Eigenschaften hat, weist dabei vorzugsweise eine größere Festigkeit auf als der Funktionsbereich, welcher mit dem Medium in Kontakt kommt. Im Unterschied dazu ist die Härte des Funktionsbereiches, der mit dem Medium in Kontakt kommt, größer gegenüber der Härte des Funktionsbereiches, der tragende Eigenschaften hat.

Auch die Zähigkeit und/oder die Bruchdehnung der unterschiedlichen Funktionsbereiche kann durch den Energieeintrag über die Strahlung gezielt beeinflusst werden, um unterschiedliche Eigenschaften des strömungsführenden Bauteils zu erzeugen.

Von besonders großem Vorteil ist die Fertigung auch von großen Gehäusen für strömungsführende Bauteile in einem additiven Fertigungsverfahren. Durch den Einsatz eines besonders beweglichen Roboterarmes, der über unterschiedliche Werkzeuge der additiven Fertigung verfügt, können besonders komplexe und auch große Gehäuse gefertigt werden, deren Funktionsbereiche aus unterschiedlichem Aufbaumaterial gebildet sind.

Erfindungsgemäß werden die Schichten der Funktionsbereiche aus unterschiedlichem Aufbaumaterial gemeinsam in einem generativen Verfahren gebildet und dabei die Schichten unmittelbar erzeugt.

Vorzugsweise wird durch die unmittelbare und gemeinsame Erzeugung der Funktionsbereiche in einem additiven Fertigungsverfahren eine stoffschlüssige Ausbildung und/oder formschlüssige Kombination der Funktionsbereiche des Gehäuses für strömungsführende Bauteile generiert.

Weitere Merkmale und Vorteile der Erfindung ergeben sich aus der Beschreibung von Ausführungsbeispielen anhand der Zeichnungen und aus den Zeichnungen selbst.

Dabei zeigt:
- Figur 1: eine Schnittdarstellung einer Kreiselpumpenanordnung,
- Figur 2: eine Schnittdarstellung eines Ventils,
- Figur 3: eine schematische Darstellung der Funktionsbereiche mit unterschiedlichem Aufbaumaterial.

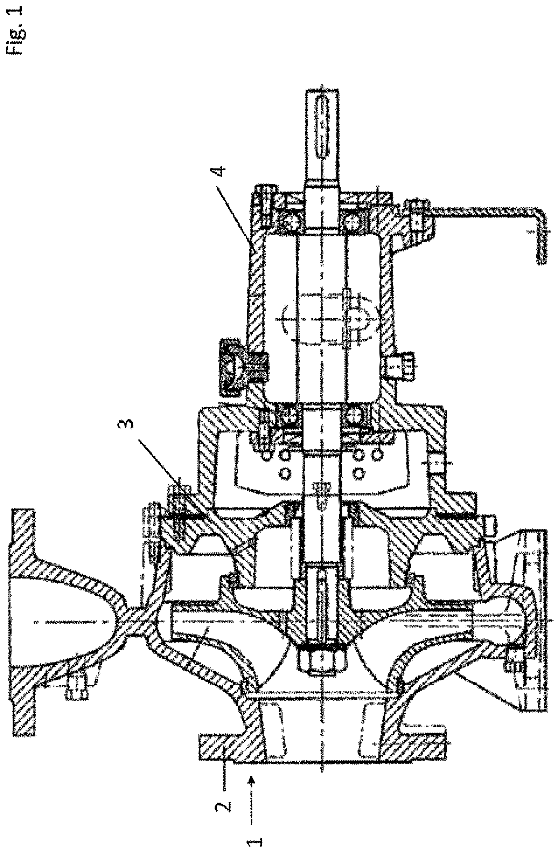

Figur 1 zeigt eine Schnittdarstellung durch eine Kreiselpumpe mit einem Gehäuse 1 für strömungsführende Bauteile. Das Gehäuse 1 besteht aus drei Gehäuseteilen 2, 3 und 4. Das Spiralgehäuse 2 weist einen Saugstutzen und einen Druckstutzen auf und umgibt das Laufrad der Pumpe. Die Lagerträgerdeckel 3 und 4 dienen zur Aufnahme der Lager sowie der Abdichtung des Fluidraumes.

Das Laufrad ist als Radiallaufrad ausgeführt und wird von einer Welle angetrieben. Die Welle wird von einem in dieser Darstellung nicht gezeigten Motor in Rotation versetzt. Die Welle ist über Lager abgestützt.

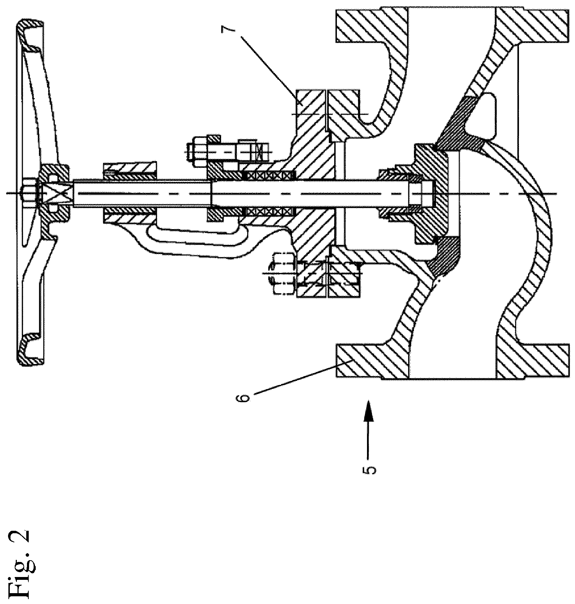

Figur 2 zeigt eine Schnittdarstellung eines Gehäuses 5 für strömungsführende Bauteile in der Beispielausführung eines Ventils. Das Ventil weist ein Gehäuse 6 mit einem Ventildeckel 7 auf. In dem Gehäuse 6 ist ein Absperrkörper angeordnet, der über eine Spindel mittels eines Antriebs in vertikaler Richtung verschoben werden kann.

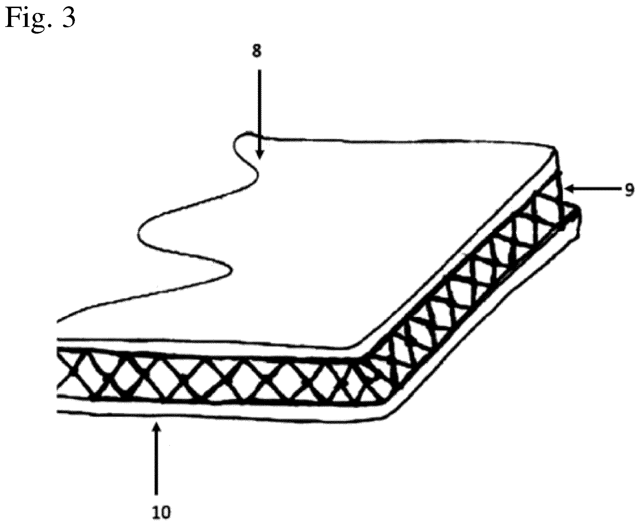

Figur 3 zeigt eine schematische Darstellung der Funktionsbereiche 8, 9 und 10 eines Gehäuses für strömungsführende Bauteile.

In der dargestellten Variante der Erfindung ist der Funktionsbereich 8 mit Kontakt zum strömenden Medium vorzugsweise mit einem Kaltgasspritz-Werkzeug des additiven Fertigungsverfahrens gebildet. Der Beschichtungswerkstoff wird dazu in Pulverform mit sehr hoher Geschwindigkeit auf den Funktionsbereich 9 mit tragenden Eigenschaften aufgebracht. Hierfür wird ein auf wenige hundert Grad aufgeheiztes Prozessgas, beispielsweise Stickstoff oder Helium, durch Expansion in einer Lavaldüse auf Überschallgeschwindigkeit beschleunigt und anschließend die Pulverpartikel in den Gasstrahl injiziert. Die injizierten Partikel werden dabei auf eine so hohe Geschwindigkeit beschleunigt, dass sie beim Aufprall auf Teile des Gehäuses eine dichte und fest haftende Schicht bilden.

Der Funktionsbereich 9 mit tragenden Eigenschaften wird beispielgebend mit einem Schmelzschicht-Werkzeug des additiven Fertigungsverfahren erzeugt, bei dem aus schmelzfähigem Kunststoff ein Raster von Punkten auf eine Fläche aufgetragen wird. Durch Aufschmelzen und Extrudieren mithilfe einer Düse sowie dem anschließenden Erhärten durch Abkühlung an der gewünschten Position wird ein tragfähiger Aufbau, insbesondere in Form eines Gitters erzeugt. Indem der Funktionsbereich 9 hohlraumbildend mit besonders tragfähiger Struktur erzeugt wird, weist der Funktionsbereich 9 eine enorme Festigkeit bei gleichzeitig sehr geringem Gewicht auf.

Der Funktionsbereich 10 mit abschließenden Eigenschaften wird aus einem pulverförmigen Aufbaumaterial durch aufeinanderfolgendes Schmelzen und Erstarren von Schichten mittels Strahlung hergestellt. Das metallische Pulver, insbesondere niedriglegierte und/oder hochlegierte Stahlpulverteilchen und/oder cobalthaltige Pulverpartikel mit Zusätzen wie beispielsweise Chrom, Molybdän oder Nickel, wird in einer dünnen Schicht auf eine Platte aufgebracht. Der pulverförmige Werkstoff wird mittels Strahlung an den jeweils gewünschten Stellen lokal vollständig umgeschmolzen und bildet nach der Erstarrung eine feste Materialschicht.

Die Schichten der Funktionsbereiche 8, 9 und 10 aus unterschiedlichem Aufbaumaterial werden gemeinsam in einem generativen Verfahren gebildet und dabei die Schichten unmittelbar erzeugt. Dadurch wird eine stoffschlüssige Ausbildung und/oder formschlüssige Kombination der Funktionsbereiche 8, 9 und 10 des Gehäuses für strömungsführende Bauteile generiert.

## Patentansprüche

1. Verfahren zur Herstellung eines Gehäuses (1, 5) für ein strömungsführendes Bauteil, welches mindestens zwei Funktionsbereiche (8, 9, 10) aufweist, **dadurch gekennzeichnet, dass** jeder Funktionsbereich (8, 9, 10) aus einem unterschiedlichen Aufbaumaterial generiert ist und die unterschiedlichen Funktionsbereiche (8, 9, 10) mittels einer integrativen Fertigungseinheit in Form eines Roboterarms, der über Werkzeuge unterschiedlicher additiver Verfahren verfügt, Schicht für Schicht ausgebildet sind, mit folgenden Schritten:
• Ausbilden mindestens eines Funktionsbereichs (8, 9, 10) in Gitter- bzw. Wabenstruktur aus einem Aufbaumaterial,
• Aufbringen einer Schicht eines Aufbaumaterials zur Erzeugung eines Funktionsbereichs (8, 9, 10),
• Selektives Einwirken von Energie in Form von Strahlung, Temperatur und Druck zur Gestaltung mindestens eines Funktionsbereichs (8, 9, 10),
• Gezielte Variation der Energieeinwirkung zur Erzeugung mindestens eines Funktionsbereichs (8, 9, 10) mit Zonen und Gefügen unterschiedlicher Werkstoffzustände eines chemisch-homogenen Werkstoffs und damit unterschiedlichen Eigenschaften,
• Gezielte Variation des Materialauftrags mittels Prozessgasstrahls zur Erzeugung mindestens eines Funktionsbereichs (8, 9, 10) mit definierter Schichtdicke.

## Claims

1. Method of producing a housing (1, 5) for a flow-conducting component having at least two functional regions (8, 9, 10), **characterized in that** each functional region (8, 9, 10) is generated from a different build material and the different functional regions (8, 9, 10) are formed layer by layer by means of an integrative manufacturing unit in the form of a robot arm which has tools for different additive methods, having the following steps:
• forming at least one functional region (8, 9, 10) in grid or honeycomb structure from a build material,
• applying a layer of a build material for creation of a functional region (8, 9, 10),
• selectively applying energy in the form of radiation, heat and pressure for configuration of at least one functional region (8, 9, 10),
• controlled variation of the energy input for creation of at least one functional region (8, 9, 10) having zones and microstructures of different material states of a chemically homogeneous material and hence different properties,
• controlled variation of the material application by means of a process gas jet for creation of at least one functional region (8, 9, 10) having defined layer thickness.

## Revendications

1. Procédé de fabrication d'un boîtier (1, 5) pour un composant de guidage de flux, qui comporte au moins deux zones fonctionnelles (8, 9, 10), **caractérisé en ce que** chaque zone fonctionnelle (8, 9, 10) est produite à partir d'un matériau de construction différent et les différentes zones fonctionnelles (8, 9, 10) sont formées couche par couche au moyen d'une unité de production d'intégration sous la forme d'un bras robotisé qui dispose d'outils de différents procédés additifs, avec les étapes suivantes :
• formation d'au moins une zone fonctionnelle (8, 9, 10) dans une structure en grille ou en nid d'abeilles à partir d'un matériau de construction,
• application d'une couche d'un matériau de construction pour la génération d'une zone fonctionnelle (8, 9, 10),
• exposition sélective à une énergie sous forme de rayonnement, de température et de pression pour concevoir au moins une zone fonctionnelle (8, 9, 10),
• variation ciblée de l'action de l'énergie pour générer au moins une zone fonctionnelle (8, 9, 10) avec des zones et des structures d'états de matériau différents d'un matériau chimiquement homogène et donc de propriétés différentes,
• variation ciblée de l'application de matériau au moyen d'un jet de gaz de processus pour la génération d'au moins une zone fonctionnelle (8, 9, 10) d'une épaisseur de couche définie.
